# EUROPEAN PATENT APPLICATION

(11) **EP 1 309 196 A2**
(43) Date of publication of application: **07.05.2003**
(21) Application number: 02023778.0
(22) Date of filing: 25.10.2002
(51) Int. Cl.: H04N 7/24

(54) **File creating method and data reproduction method**

(30) Priority: 29.10.2001 JP 2001330436
(71) Applicant: MATSUSHITA ELECTRIC INDUSTRIAL CO., LTD., Kadoma-shi, Osaka 571-8501 (JP)
(72) Inventor: Matsui, Yoshinori, Nara, 630-0212 (JP); Imura, Koji, Tokyo, 194-0013 (JP); Otake, Naoto, Yokohama-shi, Kanagawa, 233-0007 (JP)
(74) Representative: Holmes, Miles Keeton

(57) **Abstract**

A file creating device (201) includes (1) a data input unit (202) that receives audio data from outside and outputs digital audio data, (2) an encoding unit (203) that encodes the digital audio data, creates one access unit by putting together encoded samples so as to keep the size of all the access units the same in a byte unit, and outputs the access units to a file output unit (205), (3) a format creating unit (204) that acquires format information from the encoding unit (203), creates header information of an MP4 file, and outputs the header information to the file output unit (205), and (4) the file output unit (205) that creates an access unit train by multiplexing the access units acquired from the encoding unit (203), and outputs the MP4 file by combining the access unit train and the header information acquired from the format creating unit (204).

## Description

### BACKGROUND OF THE INVENTION

### (1) Field of the Invention

The present invention relates to a data file creating method and a data reproduction method according to an audio encoding method such as G.726.

### (2) Description of the Related Art

Conventionally, an audio encoding method such as G.726 or G.727 and a video encoding method for communication such as H.261 have been standardized by ITU-T (International Telecommunication Union - Telecommunication Standardization Sector). As a usage of audio data or video data encoded by this type of encoding method for communication, it is usually transmitted directly via a communication channel like telecommunication, but it can be assumed that the encoded audio data or video data is temporarily stored as a file and later decoded from the file to reproduce sounds or moving pictures.

The present embodiment will be described using G.726 as an example of this type of encoding method for communication. G.726 is an audio encoding method for encoding 8,000 audio samples per second at four types of encoding rates, 16 kbps, 24 kbps, 32 kbps and 40 kbps. 2 bits, 3 bits, 4 bits and 5 bits are allocated to respective audio samples depending upon their encoding rates in this order. Note that an audio sample which is to be encoded according to G.726 will be hereafter referred to as "G.726 sample".

By the way, there is an MP4 file format standardized by ISO/IEC JTC1/SC29/WG11 MPEG, as an internationally standardized file format. A unit for decoding data in this MP4 file format is called an "access unit". One access unit corresponds to one frame in an encoding method, such as MPEG4-AAC (Moving Picture Experts Group phase 4 Advanced Audio Coding), for encoding a plurality of audio samples in a frame structure all together in unison, while one G.726 sample corresponds to one access unit in an encoding method, such as G.726, for encoding samples in a non- frame structure.

A conventional file creating method will be explained below.

First, a G.726 sample is created by encoding digital audio data at any one of encoding rates of G.726, and then one access unit is created from one G.726 sample. In creating an MP4 file, it is necessary to record one access unit in a byte unit, that is, in the unit of an integral multiple of 8 bits. One G.726 sample is, even if it is encoded at any of the above encoding rates, 2 ∼ 5 bits, not an integral multiple of 8 bits, so padding data of 6 ∼ 3 bits is added so as to create one access unit of an integral multiple of 8 bits, depending upon the G.726 encoding rates.

Then, when the last access unit is created after the above-mentioned encoding, all the access units are multiplexed to make them an access unit train, and combined with header information of an MP4 file to create the MP4 file.

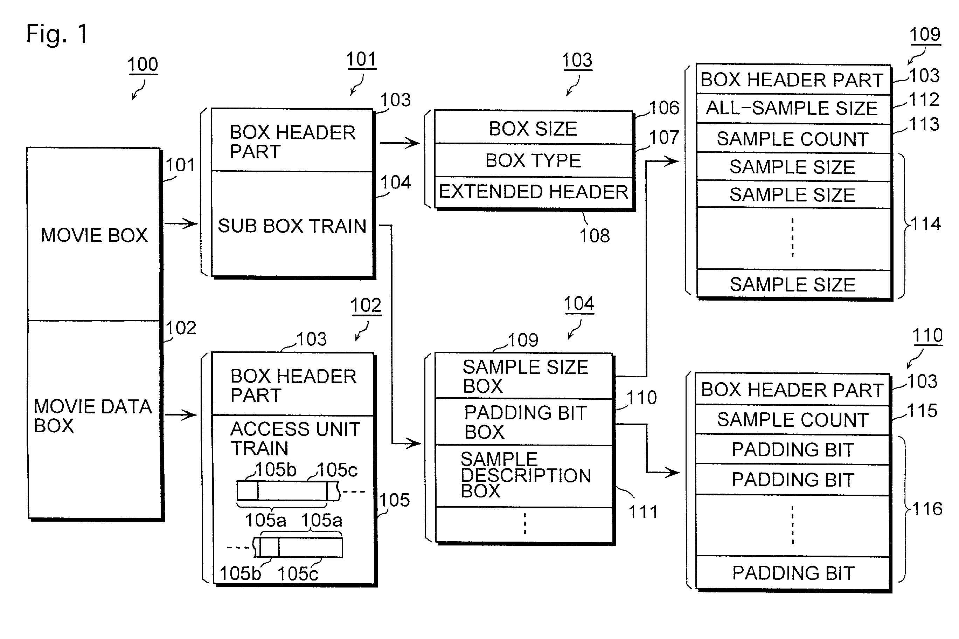

Fig. 1 is a diagram showing a structure of an MP4 file which is created according to the above-mentioned conventional file creating method.

As shown in this figure, an MP4 file 100 includes a movie box 101 and a movie data box 102, and the header information of the MP4 file is stored in the movie box 101 and the access unit train is stored in the movie data box 102.

The movie box 101 includes a box header part 103 for storing header information of the box and a sub box train 104 comprising of a group of boxes for storing the format information of the MP4 file 100. Here, a combination of the header information of the box and the format information is called the header information of MP4 file.

The box header part 103, which is included in all the boxes, is a box in which the header information of each box is stored, and records the header information of the box in a box size 106, a box type 107 and so on.

In the box size 106, information indicating the size of the box in a byte unit is stored. If the size of the movie box 101 is 10 KB (kilobytes), for instance, the information of 10 K is stored in the box size 106.

In the box type 107, information representing a box type by a 4-letter code. When the type of the movie box 101 is represented, for instance, the code information "moov" is stored in the box type 107. When the type of the movie data box 102 is represented, the code information "mdat" is stored there.

The sub box train 104 includes a sample size box 109, a padding bit box 110, a sample description box 111 and so on.

The sample size box 109 is a box in which the size and number information of the access units are stored, and includes a box header part 103, an all-sample size 112, a sample count 113 and a sample size train 114.

In the all-sample size 112, the size of the access units, if all of them have the same size, is recorded. In this case, the sample size train 114 is not created. Also, the total number of the access units is recorded in the sample count 113, and the sizes of all the access units are recorded in the sample size train 114 if at least one access unit has a different size. In this case, "0" is set in the all-sample size 112.

A padding bit box 110 is a box in which the bit information of the padding data included in all the access units in order to make one access unit an integral multiple of 8 bits is stored, and includes a box header part 103, a sample count 115 and a padding bit train 116.

In the sample count 115, the total number of the access units is recorded, as is the case with the sample count 113. In the padding bit train 116, information indicating the bits of padding data included in the access unit is stored, and the bit information of the padding data is recorded for every access unit.

The sample description box 111 is a box in which different information is stored for each encoding method, such as G.726 and G.727, and specifically, the information such as an encoding rate is stored.

Furthermore, the movie data box 102 includes a box header unit 103 and an access unit train 105, and the access unit train 105 is composed of multiplexed access units 105a. One access unit 105a is composed of a G.726 sample 105b and padding data 105c (See ISO/IEC 14496-1 "ISO Media File Format Specification" published by ISO/IEC JTC1/SC29/WG11 MPEG, July 20, 2001).

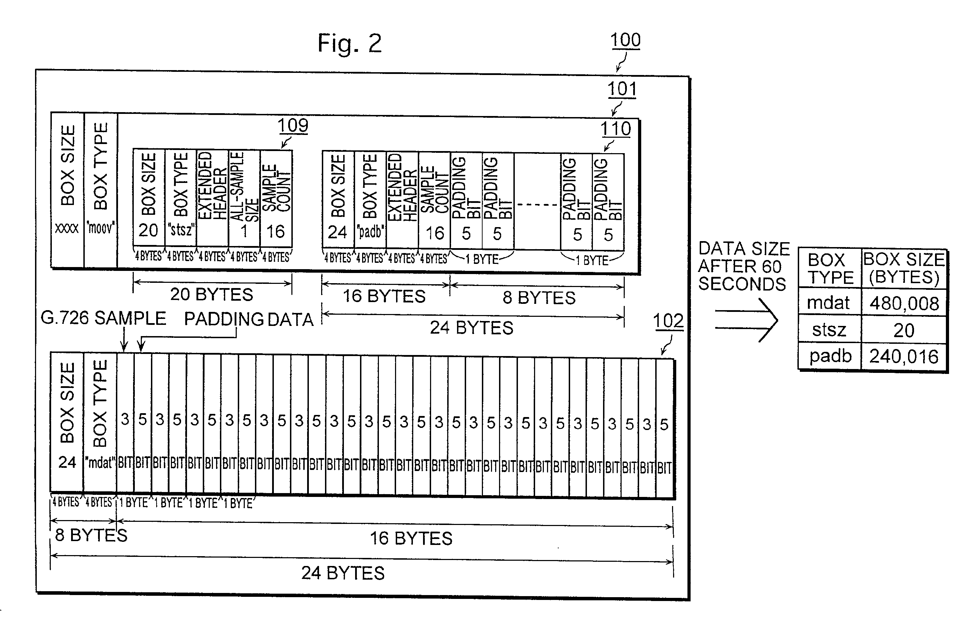

Fig. 2 is a diagram for explaining a size of a file created by encoding G.726 samples at the G.726 encoding rate of 24 kbps, using the conventional file creating method.

The MP4 file 100 includes the movie box 101 and the movie data box 102, as described above, the file size of the MP4 file 100 is calculated by combining the size of the movie box 101 and the size of the movie data box 102.

In order to simplify the explanation, a file size when 16 audio samples are encoded into G.726 samples and a file size after the encoding is performed for 60 seconds will be explained below. Also, the boxes included in the sub box train 104 in the movie box 101 will be explained using only the sample size box 109 and the padding bit box 110. Since the box size of the movie box 101 is changed depending upon the sizes of other boxes than the sample size box 109 and the padding bit box 110, it is represented by "xxxx" in Fig. 2.

As shown in Fig. 2, the sample size box 109 has a size of 20 bytes in total because five items including box size information are recorded there using 4 bytes respectively. Note that 4-letter code indicating the type of the sample size box 109 is "stsz".

Also, in the padding bit box 110, four items including box size information are recorded using 4 bytes respectively, that is, 16 bytes in total, and the number of bits of the padding data which is to be added to the G.726 samples is recorded for each access unit. Since the G.726 encoding rate is 24 kbps in this case, the number of bits of the padding data is "5". Therefore, the information indicating that the number of bits of the padding data is "5" is recorded using 4 bits for each access unit, that is, 64 bits in total for 16 access units.

Consequently, the padding bit box 110 has a size of 24 bytes in total, because 64 bits, that is, 8 bytes for recording the information indicating that the number of bits of the padding data is "5" are combined with 16 bytes for recording the items such as box size information. Note that 4-letter code indicating the type of the padding bit box 110 is "padb".

On the other hand, in the movie data box 102, the box size information and the box type information are recorded using 4 bytes respectively, that is, 8 bytes in total. 4-letter code indicating the type of the movie data box 102 is "mdat". It is necessary to make one access unit a byte unit for recording the access unit. Since 5-bit padding data is added to 3-bit G.726 sample at the encoding rate of 24 kbps, when 16 audio samples are encoded into G.726 samples, 16 access units are created, which require a size of 16 bytes. Therefore, the movie data box 102 has a size of 24 bytes in total, because 16 bytes for recording 16 access units are combined with 8 bytes for recording the items such as the box size information.

And after 60 seconds, 480,000 audio samples are encoded into G.726 samples, the size of the movie data box 102 becomes 480,008 bytes, the size of the sample size box 109 becomes 20 bytes, and the size of the padding bit box 110 becomes 240,016 bytes.

A file which is created from the audio data encoded according to G.726 by the conventional file creating method has a structure as described above, and used for a voice-accompanying e-mail which is sent along with an audio data file, a distribution via the Internet of an audio data file which is placed on a network server, downloaded, stored and reproduced, and so on.

However, according to the above-mentioned file creating method, one access unit must be made an integral multiple of 8 bits by adding padding data to the G.726 sample if one access unit is made from the G.726 sample whose number of bits is not an integral multiple of 8. In addition, the padding bit box is also required for storing the bit information of the padding data, so there occurs a problem that redundancy of the created file increases.

Furthermore, since the sizes of all the access units must be recorded in the sample size box if only one of their sizes is different from others, there occurs a problem that redundancy of the created file further increases.

As a result, there occurs a problem that not only more memory area is required for recording the file in a recording medium, and more time is required for downloading the file when it is distributed via the Internet, but also more communication rate is charged.

### SUMMARY OF THE INVENTION

Accordingly, in view of the foregoing, a prime object of the present invention is to provide an MP4 file creating method that makes it possible to downsize a file without redundancy, save a memory area for recording a file, and reduce time required for downloading a file.

The second object of the present invention is to provide a data reproduction method that makes it possible to read data from the MP4 file created using the above-mentioned file creating method so as to reproduce it.

In order to achieve the above prime object, the present invention is a file creating method of creating a file from digital encoded data including a plurality of encoded samples, the file creating method comprising: an access unit data generating step of generating a plurality of access unit data of a same size by putting together a fixed number of the encoded samples for generating one access unit data; and a file outputting step of creating a file by multiplexing the access unit data generated in the access unit data generating step and outputting the file.

Furthermore, in order to achieve the above second object, the present invention is a data reproduction method of acquiring a file in which all access unit data have a same size because each of the access unit data is generated by putting together a fixed number of encoded samples, decoding the encoded samples included in the access unit data, and reproducing digital data, the data reproduction method comprising: an access unit analyzing step of specifying the fixed number of the encoded samples included in the access unit data; and a decoding step of decoding the fixed number of the encoded samples included in the access unit data based on a result of an analysis performed in the access unit analyzing step.

According to the present invention, sizes of all access units are made same in a byte unit by putting together a plurality of encoded samples, and thereby a file is created. Therefore, the present invention makes it possible to make addition of padding data and bit information of the padding data unnecessary, minimize a sample size box, and thereby downsize a file.

Also, since the encoded samples are decoded by analyzing the number of the encoded samples included in the access unit, the present invention makes it possible to read the file created using the above-mentioned file creating method so as to decode and reproduce the file with fidelity.

### BRIEF DESCRIPTION OF THE DRAWINGS

These and other subjects, advantages and features of the invention will become apparent from the following description thereof taken in conjunction with the accompanying drawings that illustrate a specific embodiment of the invention. In the Drawings:
Fig. 1 is a diagram showing a structure of an MP4 file created by a conventional file creating method.
Fig. 2 is a diagram for explaining a file size of the MP4 file created by the conventional file creating method.
Fig. 3 is a block diagram showing a configuration of a file creating device according to the first embodiment of the present invention.
Fig. 4A is a diagram showing schematically processing of creating an access unit from G.726 samples encoded at the encoding rate of 16 kbps by the file creating device according to the first embodiment of the present invention.
Fig. 4B is a diagram showing schematically processing of creating an access unit from G.726 samples encoded at the encoding rate of 24 kbps by the file creating device according to the first embodiment of the present invention.
Fig. 4C is a diagram showing schematically processing of creating an access unit from G.726 samples encoded at the encoding rate of 32 kbps by the file creating device according to the first embodiment of the present invention.
Fig. 4D is a diagram showing schematically processing of creating an access unit from G.726 samples encoded at the encoding rate of 40 kbps by the file creating device according to the first embodiment of the present invention.
Fig. 5 is a flowchart showing processing of creating an access unit from G.726 samples by the file creating device according to the first embodiment of the present invention.
Fig. 6 is a diagram showing a structure of the MP4 file created by the file creating method according to the first embodiment of the present invention.
Fig. 7 is a diagram for explaining the size of the MP4 file created by the file creating method according to the first embodiment of the present invention.
Fig. 8 is a block diagram showing a configuration of a data reproduction device according to the second embodiment of the present invention.
Fig. 9 is a flowchart showing a part of data decoding processing by the data reproduction device according to the second embodiment of the present invention.
Fig. 10 is a diagram showing examples of how the file creating device according to the first embodiment of the present invention and the data reproduction device according to the second embodiment thereof are used.

### DESCRIPTION OF THE PREFERRED EMBODIMENT(S)

The embodiments of the present invention will be explained in detail below with reference to Fig. 1 through Fig 10.

### (The First Embodiment)

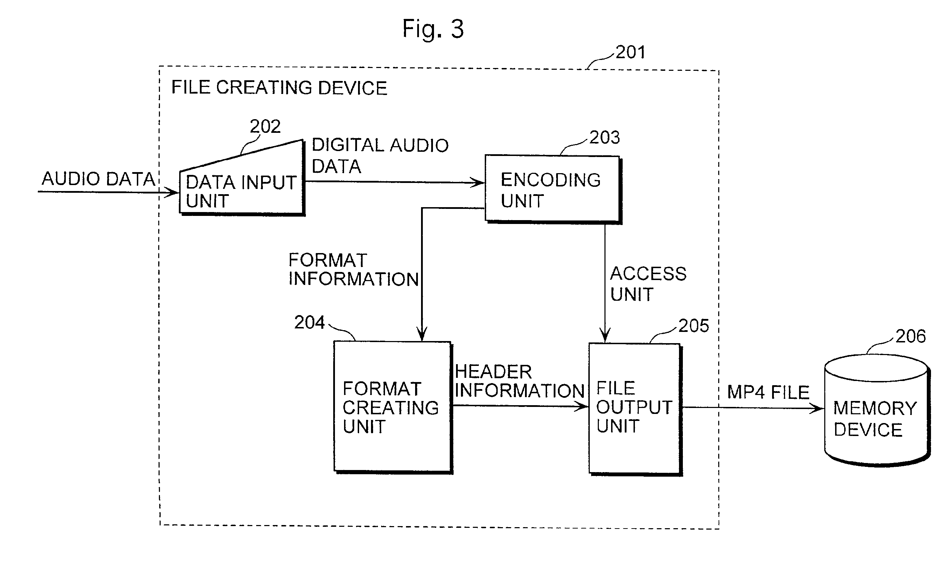

Fig. 3 is a block diagram showing a configuration of a file creating device according to the first embodiment of the present invention.

A file creating device 201 is a computer or the like that encodes input audio data upon receiving it, creates an MP4 file and writes it in a memory device 206, and includes a data input unit 202, an encoding unit 203, a format creating unit 204, a file output unit 205.

The data input unit 202 is a processing unit that accepts input audio data, such as a microphone for accepting input analog audio data or an interface for accepting input digital audio data. Here, when the data input unit 202 accepts the input analog audio data, it performs processing of sampling and quantizing the analog audio data so as to convert it into digital audio data.

The encoding unit 203 is a processing unit that encodes the digital audio data at a selected one of four G.726 encoding rates and creates G.726 samples, and includes a CPU and a memory. This encoding unit 203 creates one access unit by putting together a plurality of G.726 samples depending upon the encoding rate so that the access unit is an integral multiple of 8 bits, and outputs the created access unit to the file output unit 205. The encoding unit 203 further outputs format information for creating one access unit from G.726 samples to the format creating unit 204.

Here, the format information is the total number of access units, the size of one access unit, the number of G.726 samples included in one access unit, the number of effective samples included in the last access unit, the bit rate, etc., for instance.

The format creating unit 204 is a processing unit that creates header information of the MP4 file based on the format information, and includes a CPU and a memory. This format creating unit 204 outputs the created header information to the file output unit 205.

The file output unit 205 is a processing unit that creates an access unit train by multiplexing the access units and then creates an MP4 file by combining the access unit train and the header information, and includes a CPU and a memory. This file output unit 205 outputs the created MP4 file and stores it in a memory device 206.

The memory device 206 is a recording medium, such as a hard disk, a CD-R and an SD memory card, for storing the MP4 file created by the file creating device.

The MP4 file creating method by the file creating device configured as above will be explained below.

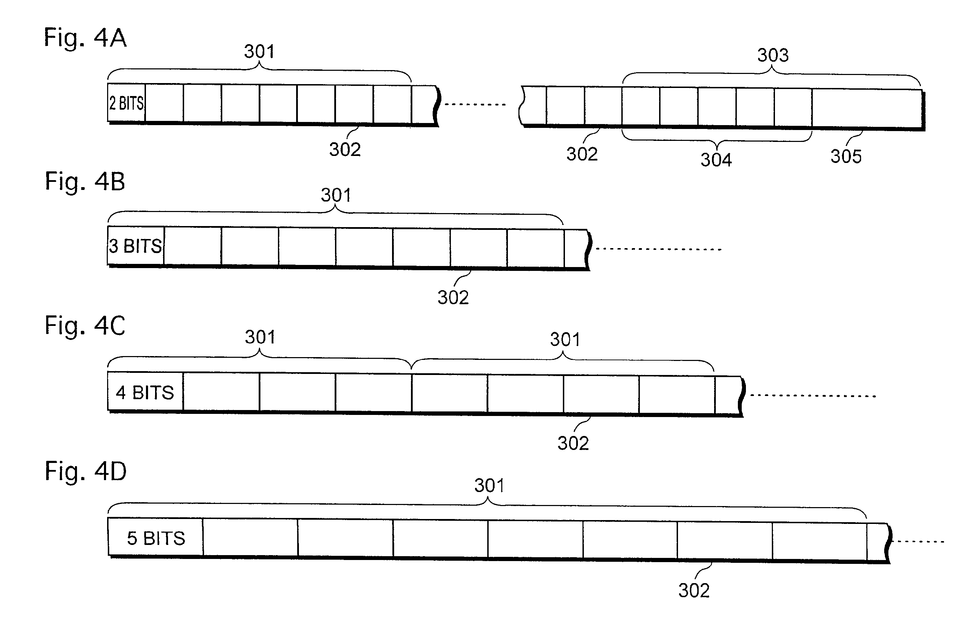

Fig. 4A is a diagram showing schematically processing of creating an access unit from G.726 samples encoded at the encoding rate of 16 kbps by the file creating device according to the first embodiment of the present invention.

As shown in this figure, the encoding unit 203 creates an access unit 301 of 16 bits, that is, 2 bytes, by putting together "8" G.726 samples 302 of 2 bits, and outputs the access unit to the file output unit 205. The encoding unit 203 continues this operation of creating one access unit by putting together eight (8) G.726 samples 302 of 2 bits and outputting the created access unit to the file output unit 205.

When the total number of samples of digital audio data inputted from the data input unit 202 is not a multiple of 8, the last access unit 303 includes 1 ∼ 7 G.726 samples 302. So, the encoding unit 203 adjusts the size of the access unit so as to be 2 bytes.

For example, as shown in this figure, when there is 5 G.726 samples 302 left, the total number of bits thereof is 5x2 bits = 10 bits, which is 6 bits short for one access unit size 2 bytes. The encoding unit 203 adjusts the size of the last access unit 303 so as to be 2 bytes by adding the padding data 305 of 6 bits.

The encoding unit 203 adjusts the size as mentioned above, and then outputs the last access unit 303 to the file output unit 205.

Furthermore, when the encoding unit 203 completes creating the last access unit 303, it outputs the format information indicating the total number of the access units and that the effective sample 304 included in the last access unit 303 is 5 G.726 samples, to the format creating unit 204.

Fig. 4B is a diagram showing schematically processing of creating an access unit from G.726 samples encoded at the encoding rate of 24 kbps by the file creating device according to the first embodiment of the present invention.

As shown in this figure, the encoding unit 203 continues creating one access unit 301 of 24 bits, that is, 3 bytes, by putting together 8 G.726 samples 302 of 3 bits, and outputting the created access unit to the file output unit 205.

When the total number of samples of digital audio data inputted from the data input unit 202 is not a multiple of 8, the last access unit 303 includes 1 ∼ 7 G.726 samples 302. So, the encoding unit 203 adjusts the size of the access unit so as to be 3 bytes, in the same manner as the above.

Fig. 4C is a diagram showing schematically processing of creating an access unit from G.726 samples encoded at the encoding rate of 32 kbps by the file creating device according to the first embodiment of the present invention.

As shown in this figure, the encoding unit 203 continues creating one access unit 301 of 16 bits, that is, 2 bytes, by putting together 4 G.726 samples 302 of 4 bits, and outputting the created access unit to the file output unit 205.

When the total number of samples of digital audio data inputted from the data input unit 202 is not a multiple of 4, the last access unit 303 includes 1 ∼ 3 G.726 samples 302. So, the encoding unit 203 adjusts the size of the access unit so as to be 2 bytes, in the same manner as the above.

Fig. 4D is a diagram showing schematically processing of creating an access unit from G.726 samples encoded at the encoding rate of 40 kbps by the file creating device according to the first embodiment of the present invention.

As shown in this figure, the encoding unit 203 continues creating one access unit 301 of 40 bits, that is, 5 bytes, by putting together 8 G.726 samples 302 of 5 bits, and outputting the created access unit to the file output unit 205.

When the total number of samples of digital audio data inputted from the data input unit 202 is not a multiple of 8, the last access unit 303 includes 1 ∼ 7 G.726 samples 302. So, the encoding unit 203 adjusts the size of the access unit so as to be 5 bytes, in the same manner as the above.

As described above, the encoding unit 203 creates one access unit 301 by putting together several G.726 samples 302 so that each of the access units 301 has a size of an integral multiple of 8 bits and the size is same, at any one of the G.726 encoding rates. When the encoding unit 203 cannot make the size of the last access unit same as that of the other access units due to the total number of G.726 samples after encoding the digital audio data inputted from the data input unit 202, it adjusts the size of the last access unit by adding the padding data so as to create the last access unit.

The number of G.726 samples which are put together for creating one access unit is not limited to the above-noted number. An arbitrary number of G.726 samples "X" may be selected so as to make the size of one access unit 301 an integral multiple of 8 bits.

However, since the access is done in a coarse grained manner if a large arbitrary number "X" is set, random access with high accuracy could not be achieved in reproducing the data.

For example, the access granularity is 1 millisecond when one access unit 301 is created by putting together 800 G.726 samples 302. On the other hand, the access granularity is 1 second when one access unit 301 is created by putting together 8,000 G.726 samples 302. Like this, a larger value of the arbitrary number "X" could lower the accuracy of the random access for reproduction of the data.

Furthermore, when one access unit 301 is created by putting together 8,000 G.726 samples 302 which are encoded at the encoding rate of 24 kbps, the size of the access unit 301 which is composed of 8,000 G.726 samples is 24,000 bits, that is, 3,000 bytes. In order to keep the size of all the access units same, in this case, maximum 23,997 bits are required for the size of the padding data 305 which is to be added to the last access unit 303, which could increase redundancy of the file.

For these reasons, it is desirable to set the value of the arbitrary number "X" as small as possible.

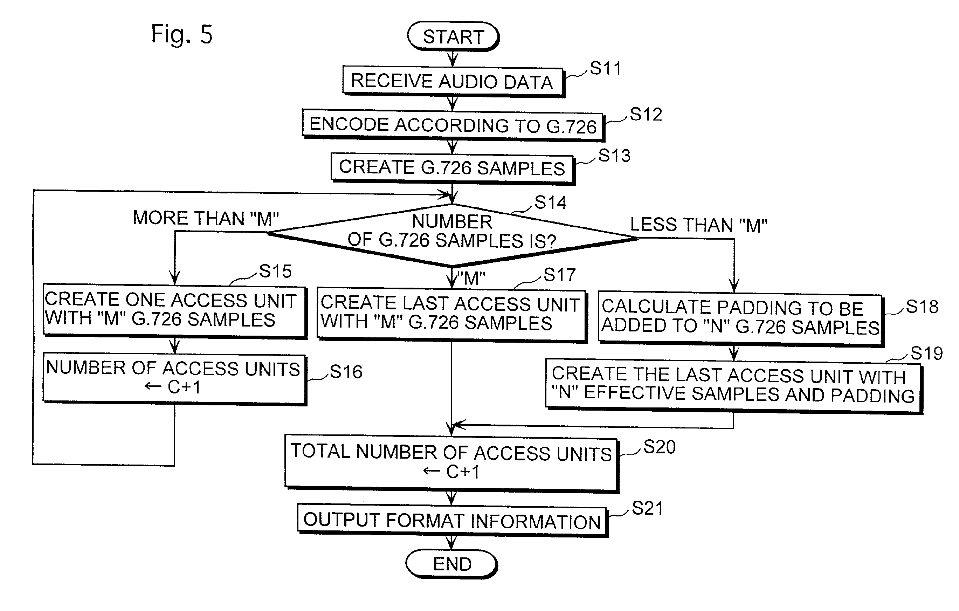

Fig. 5 is a flowchart showing processing of creating an access unit from G.726 samples by the file creating device according to the first embodiment of the present invention.

First, the data input unit 202 accepts input audio data (S11). When the audio data is analog audio data, the data input unit 202 samples and quantizes the analog audio data so as to convert it into digital audio data. Then, the data input unit 202 outputs the digital audio data to the encoding unit 203.

Next, the encoding unit 203 encodes the digital audio data received from the data input unit 202 at the G.726 encoding rate (S12), and creates G.726 samples 302 (S13). The encoding unit 203 creates an access unit 301 from the G.726 samples 302 according to predetermined file creating information. This predetermined file creating information defines the number of G.726 samples "M" making up one access unit 301 for each of the encoding rates so that the size of the access unit 301 is an integral multiple of 8 bits. Also, the number of bits "S" that are allocated to one G.726 sample can be calculated based on the encoding rate in the file creating information.

The encoding unit 203 judges the number of the encoded G.726 samples 302 (S14), and when the number of the G.726 samples is more than the number "M", it extracts "M" samples and creates one access unit 301 (S15). Then, the encoding unit 203 increments the number of access units "C" by 1 (S16), judges the number of the G.726 samples 302 again (S14), and repeats the above-mentioned operation.

When the number of the G.726 samples is the number "M", the encoding unit 203 extracts "M" samples and creates the last access unit 301 (S17). When the number of the G.726 samples is less than the number "M", it calculates the number of bits of padding data that is to be added to the residual "N" G.726 samples (S18). The encoding unit 203 calculates the padding by multiplying a value obtained by subtracting "N" from "M" by "S", and creates the last access unit 301 by adding the calculated padding to the residual "N" G.726 samples (S19).

Then, the encoding unit 203 increments the number of the access units "C" so as to calculate the total number of the access units "C" (S20). When the padding is added to the residual "N" G.726 samples, the encoding unit 203 outputs the format information including the number "N" as the number of effective samples, the total number of access units "C", the number of samples "M", the number of bits "S" and the encoding rate, to the format creating unit 204 (S21).

In the manner as described above, the file creating device 201 receives digital audio data via the data input unit 202, and the encoding unit 203 encodes the data and puts together several G.726 samples depending upon an encoding rate so as to be an access unit. Then, the encoding unit 203 outputs the access units to the file output unit 205, which multiplexes the access units so as to be an access unit train.

Also, in the file creating device 201, the encoding unit 203 outputs the format information for creating a file from digital audio data to the format creating unit 204, which creates a sub box train including a sample description box and a sample size box in which the format information is recorded.

Furthermore, in the file creating device 201, the format creating unit 204 creates a box header part in which size information of each box is recorded, and outputs a movie data box in which header information of an MP4 file is recorded and the box header part of the movie data box to the file output unit 205.

Then, in the file creating device 201, the file output unit 205 combines a box including the multiplexed access unit train, a movie box in which the header information of the MP4 file is recorded and others, and outputs the combination thereof as the MP4 file, and then stores it in the memory device 206.

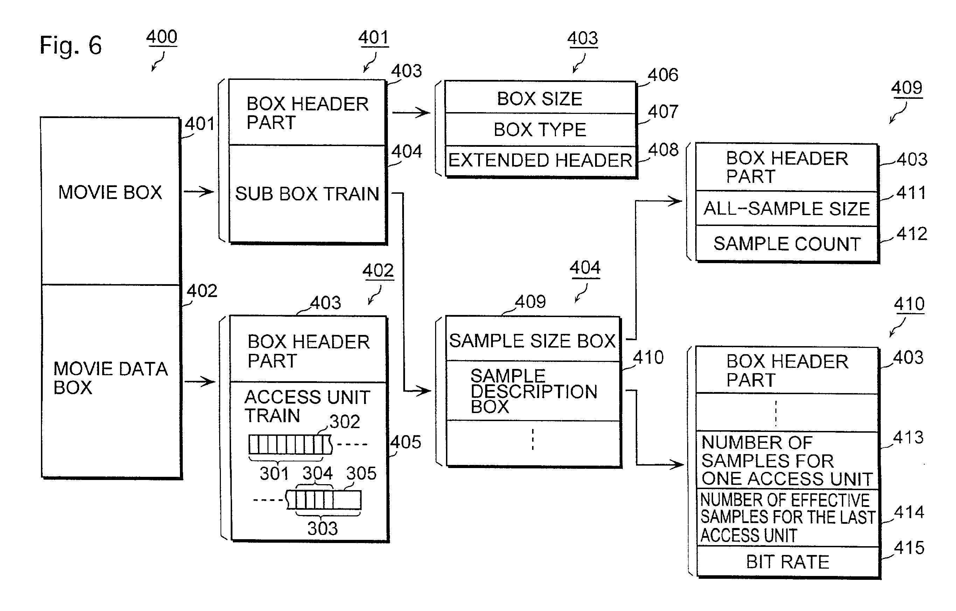

Fig. 6 is a diagram showing a structure of the MP4 file created by the file creating method according to the first embodiment of the present invention.

As shown in this figure, the MP4 file 400 includes a movie box 401 and a movie data box 402, as in the case of the conventional MP4 file 100 as described above, and has a structure having hierarchical sets of boxes.

The movie box 401 is a group of boxes in which the header information of the MP4 file is recorded. The structure of the MP4 file 400 is same as that of the conventional MP4 file 100 in that the movie box 401 includes a box header part 403 and a sub box train 404, but substantially different from the conventional one in that the sub box train 404 does not include a padding bit box although it includes a sample size box 409, a sample description box 410 and so on.

The sample size box 409 includes a box header part 403, a box 411 in which sample sizes are recorded, and a sample count box 412 in which total number of samples are recorded, and the structure of the MP4 file 400 is different from that of the conventional MP4 file 100 in that the sample size box 409 does not include a sample size train.

Furthermore, the access unit train 405 includes an access unit 301 which is created by putting together a plurality of G.726 samples 302, and the structure of the MP4 file 400 is different from that of the conventional MP4 file 100 in that the last access unit 303 includes an effective sample 304 and padding data 305.

And the structure of the MP4 file 400 is different from that of the conventional MP4 file 100 in that the number of samples for one access unit 413 and the number of effective samples for the last access unit 414 are recorded in the sample description box 410.

As described above, according to the file creating method of the present invention, since one access unit 301 is created by putting together a plurality of G.726 samples so that the size of the access unit 301 is a byte unit, that is, an integral multiple of 8 bits, it is not necessary to add padding data to each access unit. Therefore, a padding bit box in which the bit information of the padding data is recorded is unnecessary.

Also, since one access unit 301 is created by putting together a plurality of G.726 samples so that the sizes of all the access units 301 are same, it is not necessary to use a sample size train. Therefore, the sample size box 409 can be downsized.

Furthermore, even when the G.726 samples 302 cannot be put together so that the sizes of the access units 301 are integral multiples of 8 bits and all are same because there is not enough G.726 samples for the required number as a result of encoding audio samples of input digital audio data, the sizes of all the access units can be same, because the padding data 305 is added to the last access unit 303.

In addition, when the number of G.726 samples for one access unit 413 is recorded in the sample description box 410, and the padding data 305 is further added, the number of effective samples for the last access unit 414 is recorded. Therefore, the digital audio data can be reconstructed by using these information when the MP4 file is read out and then the processing of decoding and reproducing it is performed.

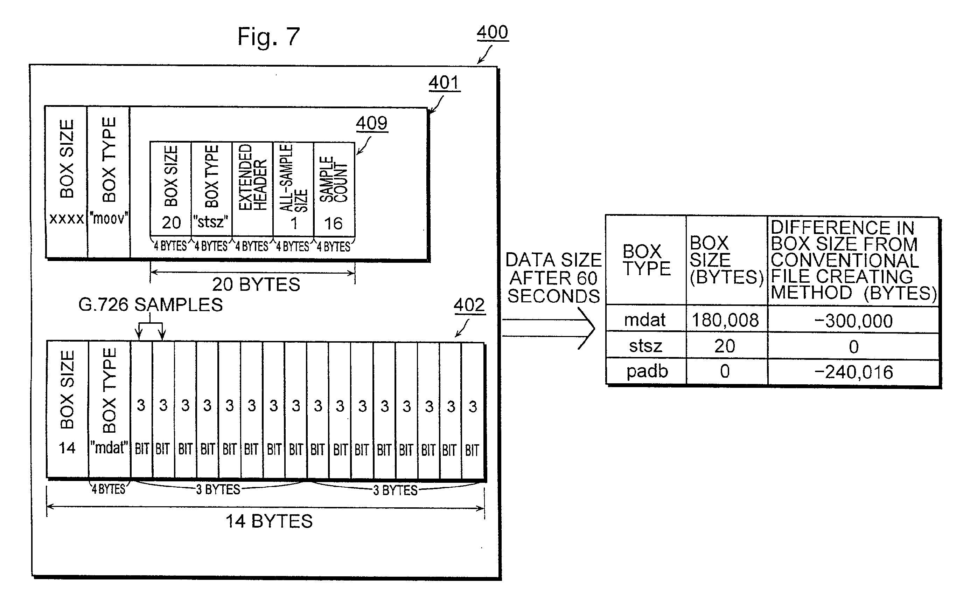

Fig. 7 is a diagram for explaining the size of the MP4 file created from the G.726 samples encoded at the G.726 encoding rate of 24 kbps, using the file creating method according to the first embodiment of the present invention.

In order to simplify the comparison with the size of the file created by the conventional file creating method, a file size when 16 audio samples are encoded into G.726 samples and a file size after the encoding is performed for 60 seconds will be explained below, in the same manner as the above-mentioned conventional file creating method. Also, the boxes included in the sub box train 404 in the movie box 401 will be explained using only the sample size box 409. Since the box size of the movie box 401 is changed depending upon the sizes of other boxes than the sample size box 409, it is represented by "xxxx".

As shown in this figure, since the items including box size information are recorded in the sample size box 409 using 4 bytes respectively, as in the case of the conventional one, the size of the sample size box 409 is 20 bytes in total.

Also, the box size information and the box type information are recorded in the movie data box 402 using 4 bytes respectively, that is, 8 bytes in total, as in the case of the conventional one.

Furthermore, when 16 audio samples are encoded into G.726 samples, 2 access units of 3 bytes are created, that is, 6 bytes are required in order to record the access units, because the access unit of 3 bytes is created by putting together 8 G.726 samples of 3 bits at the encoding rate of 24 kbps. Therefore, the size of the movie data box 402 is 14 bytes, which is the total of 8 bytes for recording the items including the box size information and 6 bytes for recording 2 access units of 3 bytes.

In addition, since there is no need to add padding data to each access unit according to the file creating method of the present invention, the padding bit box is not required for recording the bit information of the padding data.

And after 60 seconds, 480,000 audio samples are encoded into G.726 samples, and the sizes of the movie data box 402 and the sample size box 409 become 180,008 bytes and 20 bytes, respectively, and the size of the padding bit box becomes 0 byte.

Consequently, if the size of the file created by the file creating method of the present invention is compared with that created by the conventional method, the size of the movie data box 402 can be reduced by 300,000 bytes, and 240,016 bytes can be further reduced because the padding bit box is unnecessary.

### (The Second Embodiment)

Next, the data reproduction device according to the second embodiment of the present invention will be explained with reference to the figures.

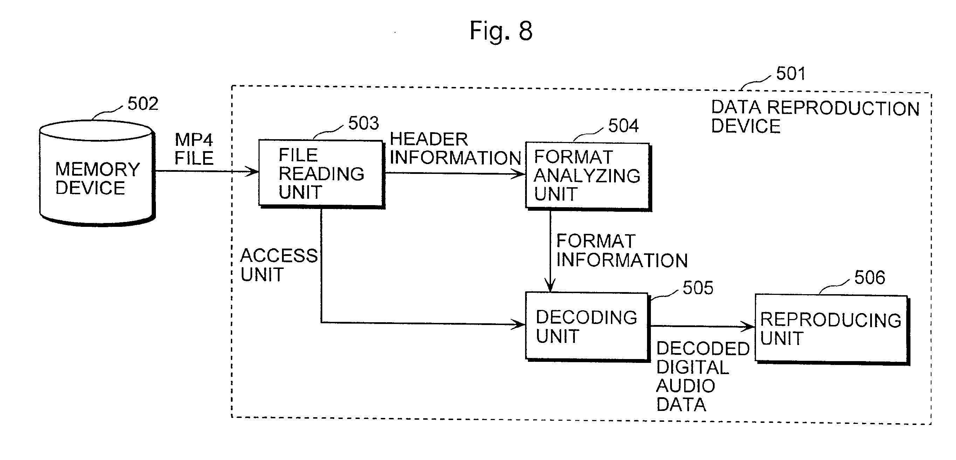

Fig. 8 is a block diagram showing a configuration of a data reproduction device according to the second embodiment of the present invention.

The data reproduction device 501 is a computer or the like that reads out an MP4 file created by the file creating device according to the first embodiment and stored in the memory device 502, decodes and reconstruct it to reproduce sounds. The data reproduction device 501 includes a file reading unit 503, a format analyzing unit 504, a decoding unit 505 and a reproducing unit 506.

The file reading unit 503 is a CD-ROM drive, an SD memory card reader, etc. that reads out an MP4 file from the memory device 502. This file reading unit 503 outputs the header information of the MP4 file to the format analyzing unit 504, and the access units in the access unit train of the MP4 file to the decoding unit 505 one by one.

The format analyzing unit 504 is a processing unit, having a CPU and others, that analyzes the header information of the MP4 file. The format analyzing unit 504 outputs the format information obtained as a result of analyzing the header information to the decoding unit 505.

The decoding unit 505 is a processing unit, having a CPU and a memory, that decodes the MP4 file into audio data. This decoding unit 505 receives the access units from the file reading unit 503 one by one, as well as the format information from the format analyzing unit 504, decodes the access units into audio data according to the format information, and outputs the data to the reproducing unit 506.

The reproducing unit 506 is an outside output device or the like such as a speaker, that converts the audio data into sounds to reproduce them. This reproducing unit 506 receives the audio data decoded by the decoding unit 505, converts it into sounds, and outputs them outside.

The memory device 502 is a recording medium, such as a hard disk, a CD-R or an SD memory card, in which the MP4 file created by the file creating device according to the first embodiment is stored.

The method of reproducing the MP4 file data by the data reproduction device as configured above will be explained below.

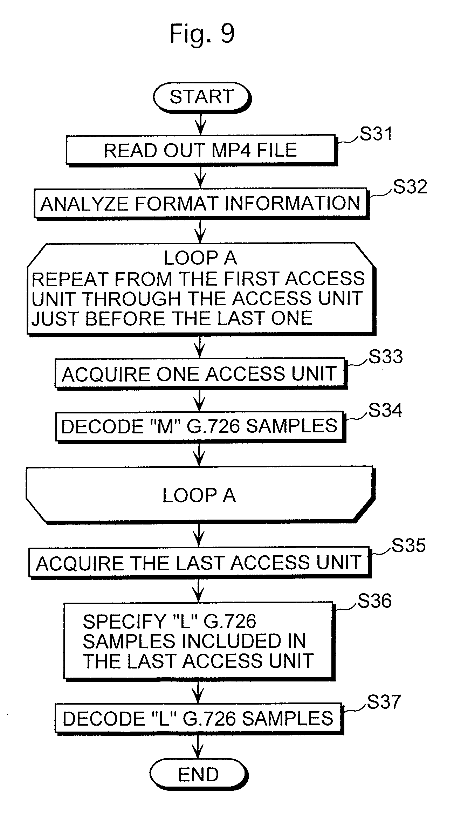

Fig. 9 is a flowchart showing a part of data decoding processing by the data reproduction device according to the second embodiment of the present invention.

First, the file reading unit 503 reads out the MP4 file stored in the memory device 502 (S31). Then, the file reading unit 503 outputs the header information of the MP4 file recorded in the movie box 401 to the format analyzing unit 504, and outputs the access units 301 out of the access unit train 405 recorded in the movie data box 402 to the decoding unit 505 one by one.

Next, the format analyzing unit 504 analyzes the sample description box, the sample size box and others in the movie data box in which the header information of the MP4 file is recorded, calculates the total number of access units "C", the number of G.726 samples 302 included in one access unit 301 "M", the number of G.726 samples included in the last access unit "L", the number of bits of one G.726 sample "S" and the encoding rate, and outputs them to the decoding unit 505 as format information (S32).

When receiving the format information and the one access unit 301, the decoding unit 505 decodes the access unit 301 according to the format information (S33). Then, the decoding unit 505 decrements the number of access units "C" by 1 (S34), and decodes "M" G.726 samples included in said one access unit 301 (S34).

Here, the decoding unit 505 calculates the residual number of the access units by recording the total number of access units "C" in the internal memory based on the format information, and repeats the above-mentioned operation for the access units just before the last one.

Then, upon receiving the last access unit from the file reading unit 503, the decoding unit 505 specifies the number of G.726 samples included in the last access unit "L" based on the format information (S36), and decodes "L" G.726 samples (S37).

Here, the decoding unit 505 specifies said number "L" based on the information recorded in the number of effective samples for the last access unit 414 in the sample description box 410. More specifically, in the first embodiment, when the number of G.726 samples used for creating the last access unit is "M", the number "L" is same as the number "M", and when the number of G.726 samples used for creating the last access unit is "N", the number "L" is same as the number "N". In either case, the decoding unit 505 can decode the G.726 samples into digital audio data.

And after decoding "L" G.726 samples included in the last access unit, the decoding unit 505 outputs the decoded digital audio data to the reproducing unit 506, and ends the decoding processing.

In the manner described as above, the data reproduction device 501 according to the second embodiment of the present invention can realize reading of data from the MP4 file created by the file creating device of the first embodiment and reproduction of sound.

As described above, the file creating device and the data reproduction device according to the embodiments of the present invention can create downsized MP4 file and read out data from the created MP4 file to reproduce sounds, and therefore they are useful. Examples of how the present invention is used will be explained below.

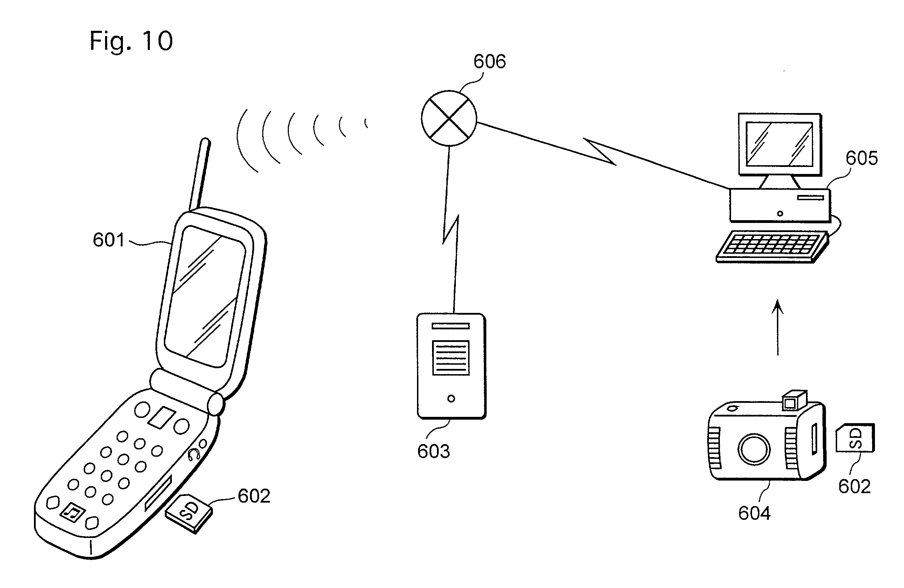

Fig. 10 is a diagram showing examples of how the file creating device according to the first embodiment of the present invention and the data reproduction device according to the second embodiment thereof are used.

The file creating device of the first embodiment and the data reproduction device of the second embodiment can be used for a music and video distribution system or the like that receives or sends an MP4 file via a communication line such as the Internet.

As shown in this figure, this music and video distribution system includes a cell phone 601, an SD memory card 602, a music and video distribution server 603, a digital camera 604, a personal computer 605 and a communication network 606.

Here, the cell phone 601, the digital camera 604 and the personal computer 605 correspond to the file creating device 201 and the data reproduction device 501, and the SD memory card 602 corresponds to the memory device 206 and the memory device 502. And the music and video distribution server 603 distributes an MP4 file via the communication network 606.

For example, an MP4 file in which music data is recorded is created using the personal computer 605 which corresponds to the file creating device 201 and the data reproduction device 501, and uploaded to the music and video distribution server 603 via the communication network 606.

When the MP4 file uploaded to the music and video distribution server 603 is downloaded using the cell phone 601 which corresponds to the file creating device 201 and the data reproduction device 501 via the communication network 606, and stored in the SD memory card 602 which corresponds to the memory device 206 and the memory device 502, the MP4 file can be read out from the SD memory card 602 to reproduce the music data.

Furthermore, a still picture or a moving picture is taken using the digital camera 604 which corresponds to the file creating device 201 and the data reproduction device 501, and an MP4 file in which the still picture data or the moving picture data is recorded is created and stored in the SD memory card 602. If the SD memory card 602 memorizing the MP4 file is taken out of the digital camera 604, the MP4 file can be reproduced using the personal computer 605 or the cell phone 606, or uploaded to the music and video distribution server 603 via the communication network 606.

As described above, the present invention is realized in the music and video distribution system, for instance. Since the created MP4 file can be downsized according to the file creating device and the data reproduction device of the present invention, the communication time required for uploading and downloading it can be shortened, and further the capacity of the memory device such as an SD memory card can be used efficiently.

The file creating method and the data reproduction method according to the present invention have been explained based on the first and second embodiments, but the present invention is not limited to them.

An encoding method for communication is explained in the above first and second embodiments, taking G.726 as an example, but the present invention is not limited to G.726 and can be applied to other encoding methods for communication, such as G.727 and H.261.

In the first embodiment, the relationship between the encoding rate and the number of G.726 samples included in one access unit is determined according to a specified file creating information, but the number of G.726 samples included in one access unit may be dynamically determined when a file is created.

Furthermore, in the first embodiment, the number of effective samples included in the last access unit is specified directly, but other indexes may be used for calculating the number of effective samples included in the last access unit. For example, the total number of G.726 samples, "number_of_samples", for instance, can be used to get the same effect. More specifically, a remainder obtained by dividing the total number of G.726 samples by the number of G.726 samples included in one access unit may be the number of effective samples included in the last access unit.

Also, in the first and second embodiments, the file creating device and the data reproduction device are connected to a memory device such as a hard disk, but they may be connected to a file server via a network.

Furthermore, the present invention may be realized as software in which the operations in the file creating device and the data reproduction device of the first and second embodiments are described as a program.

## Claims

1. A file creating method of creating a file from digital encoded data including a plurality of encoded samples, the file creating method comprising:
an access unit data generating step of generating a plurality of access unit data of a same size by putting together a fixed number of the encoded samples for generating one access unit data; and
a file outputting step of creating a file by multiplexing the access unit data generated in the access unit data generating step and outputting the file.

2. The file creating method according to Claim 1,
wherein in the access unit data generating step, the fixed number of the encoded samples are put together so as to keep the size of all the access unit data same in a byte unit.

3. The file creating method according to Claim 1 further comprising a format information generating step of generating first sub information indicating the fixed number of the samples which are put together in the access unit data generating step,
wherein in the file outputting step, a file including the first sub information generated in the format information generating step is created and outputted.

4. The file creating method according to Claim 3 further comprising a dummy sample adding step of adding at least one dummy sample whose number corresponds to an insufficient number of the encoded samples when the number of the encoded samples included in the last access unit data is less than the fixed number of the samples.

5. The file creating method according to Claim 4,
wherein further in the format information generating step, second sub information indicating the number of the encoded samples included in the last access unit data is generated when the number of the encoded samples included in the last access unit data is less than the fixed number of the samples.

6. A data reproduction method of acquiring a file in which all access unit data have a same size because each of the access unit data is generated by putting together a fixed number of encoded samples, decoding the encoded samples included in the access unit data, and reproducing digital data, the data reproduction method comprising:
an access unit analyzing step of specifying the fixed number of the encoded samples included in the access unit data; and
a decoding step of decoding the fixed number of the encoded samples included in the access unit data based on a result of an analysis performed in the access unit analyzing step.

7. The data reproduction method according to Claim 6,
wherein further in the access unit analyzing step, the number of the encoded samples included in the last access unit data is specified when at least one dummy sample is added to the last access unit data, and
in the decoding step, the encoded samples included in the last access unit data to which the dummy sample is added based on the result of the analysis performed in the access unit analyzing step is decoded.

8. A file creating device that creates a file from digital encoded data including a plurality of encoded samples, the file creating device comprising:
an access unit data generating unit operable to generate a plurality of access unit data of a same size by putting together a fixed number of the encoded samples for generating one access unit data; and
a file outputting unit operable to create a file by multiplexing the access unit data generated by the access unit data generating unit and output the file.

9. The file creating device according to Claim 8,
wherein the access unit data generating unit puts together the fixed number of the encoded samples so as to keep the size of all the access unit data same in a byte unit.

10. The file creating device according to Claim 8 further comprising a format information generating unit operable to generate first sub information indicating the fixed number of the samples which are put together by the access unit data generating unit,
wherein the file outputting unit creates a file including the first sub information generated by the format information generating unit and outputs the file.

11. The file creating device according to Claim 10 further comprising a dummy sample adding unit operable to add at least one dummy sample whose number corresponds to an insufficient number of the encoded samples when the number of the encoded samples included in the last access unit data is less than the fixed number of the samples.

12. The file creating device according to Claim 11,
wherein the format information generating unit further generates second sub information indicating the number of the encoded samples included in the last access unit data when the number of the encoded samples included in the last access unit data is less than the fixed number of the samples.

13. A data reproduction device that acquires a file in which all access unit data have a same size because each of the access unit data is generated by putting together a fixed number of encoded samples, decodes the encoded samples included in the access unit data, and reproduces digital data, the data reproduction device comprising:
an access unit analyzing unit operable to specify the fixed number of the encoded samples included in the access unit data; and
a decoding unit operable to decode the fixed number of the encoded samples included in the access unit data based on a result of an analysis performed by the access unit analyzing unit.

14. The data reproduction device according to Claim 13,
wherein the access unit analyzing unit further specifies the number of the encoded samples included in the last access unit data when at least one dummy sample is added to the last access unit data, and
the decoding unit decodes the encoded samples included in the last access unit data to which the dummy sample is added based on the result of the analysis performed by the access unit analyzing unit.

15. A program for creating a file from digital encoded data including a plurality of encoded samples, comprising:
an access unit data generating step of generating a plurality of access unit data of a same size by putting together a fixed number of the encoded samples for generating one access unit data; and
a file outputting step of creating a file by multiplexing the access unit data generated in the access unit data generating step and outputting the file.

16. A program for acquiring a file in which all access unit data have a same size because each of the access unit data is generated by putting together a fixed number of encoded samples, decoding the encoded samples included in the access unit data, and reproducing digital data, the program comprising:
an access unit analyzing step of specifying the fixed number of the encoded samples included in the access unit data; and
a decoding step of decoding the fixed number of the encoded samples included in the access unit data based on a result of an analysis performed in the access unit analyzing step.

17. A computer-readable recording medium on which a file is recorded,
wherein the file includes:
a plurality of access unit data of a same size generated by putting together a fixed number of encoded samples for generating one access unit data; and
first information indicating the number of the encoded samples included in one access unit data.

18. The recording medium according to Claim 17,
wherein the last access unit data out of a plurality of the access unit data includes at least one dummy sample in one case and does not include the dummy sample in the other case, and
the file further includes second information indicating the number of the encoded samples included in the last access unit data.
